# EUROPÄISCHE PATENTSCHRIFT

(11) **EP 1 275 860 B1**
(45) Veröffentlichungstag und Bekanntmachung des Hinweises auf die Patenterteilung: **18.02.2004**
(21) Anmeldenummer: 01116963.8
(22) Anmeldetag: 12.07.2001
(51) Int. Cl.: F16B 13/06, F16B 13/12

(54) **Dübel zur Befestigung an Hohl- und an Vollbaustoffen**
Plug to be fastened to hollow and solid building materials
Cheville destinee a etre fixee a des materiaux de construction creux et solides

(43) Veröffentlichungstag der Anmeldung: 15.01.2003
(73) Patentinhaber: fischerwerke Artur Fischer GmbH & Co. KG, 72178 Waldachtal (DE)
(72) Erfinder: Nehl, Wolfgang, 72178 Waldachtal (DE)

(56) Entgegenhaltungen:
- DE-A- 2 947 752
- DE-A- 19 600 931
- DE-A- 19 855 139
- US-A- 4 861 206

## Beschreibung

Die Erfindung betrifft einen Dübel zur Befestigung an Hohl- und an Vollbaustoffen. Dabei sind mit Hohlbaustoffen beispielsweise Hohlblockziegel oder Platten, hinter denen sich ein Hohlraum befindet, gemeint. Mit Vollbaustoffen ist beispielsweise Beton oder dgl. gemeint.

Derartige Dübel sind an sich bekannt. Sie sind üblicherweise aus Kunststoff hergestellt und weisen in einem Mittelbereich sich in Längsrichtung erstreckende Spreizschenkel oder eine Hülse auf, die eventuell durch Schlitze voneinander getrennt sind, siehe z.B. DE-A- 19 600 931, DE-A-19 855 139 und US-A-4 861 206. An einem hinteren Ende sind die Spreizschenkel durch ein hülsenförmiges Dübelende und an einem vorderen Ende durch eine hülsenförmige Dübelspitze miteinander verbunden. Eine Spreizschraube ist durch das hülsenförmige Dübelende durchsteckbar und in die Dübelspitze einschraubbar. Zur Befestigung des Dübels in einem Vollbaustoff wird der Dübel in ein Bohrloch in dem Vollbaustoff eingesetzt und es wird eine Spreizschraube in den Dübel eingeschraubt. Die Spreizschraube drückt die Spreizschenkel auseinander, d. h. die Spreizschraube spreizt die Spreizschenkel auf und verankert dadurch den Dübel im Bohrloch im Vollbaustoff.

In einem Hohlbaustoff oder in einer Platte wird der Dübel durch ein Bohrloch durchgesteckt, so dass sich sein hülsenförmiges Dübelende im Hohlbaustoff befindet. Anschließend wird eine Spreizschraube durch das Dübelende durchgesteckt, zwischen den Spreizschenkeln durchgeführt und in die Dübelspitze eingeschraubt. Durch das Einschrauben der Spreizschraube in die Dübelspitze wird diese auf das Dübelende zubewegt, wobei die Spreizschenkel aufgespreizt werden. Es sind an sich zwei Spreizmöglichkeiten bekannt. Die erste ist, dass die Spreizschenkel durch Annäherung der Dübelspitze an das Dübelende nach außen ausknicken und dadurch den Hohlbaustoff formschlüssig hintergreifen. Die andere Möglichkeit ist, dass sich die Dübelspitze beim Einschrauben der Spreizschraube gegenüber dem Dübelende verdreht, wodurch die Spreizschenkel um einander gewunden werden und ein knotenartiges Gebilde bilden, welches den Hohlbaustoff hintergreift.

Die bekannten Dübel mit Schlitzen haben den Nachteil einer schlechten Schraubenführung, die Spreizschraube kann beim Eindrehen seitlich durch die Schlitze zwischen den Spreizschenkeln austreten. Weiterer Nachteil der bekannten Dübel ohne Schlitzen ist deren geringe Torsionssteifigkeit, die beim Eindrehen der Spreizschraube zu einer elastischen Verdrehung der Dübelspitze gegenüber dem Dübelende führt. Beim Einschrauben der Spreizschraube von Hand bewirkt die elastische Verdrehung der Dübelspitze in Bezug auf das Dübelende, dass, wenn ein Schraubendreher zum "Nachfassen" gelöst wird, die Dübelspitze zusammen mit der in sie eingeschraubten Spreizschraube wieder zurückdreht. Dies hat zur Folge, dass sich die Spreizschraube von Hand nur schlecht in den Dübel eindrehen lässt.

Der Erfindung liegt die Aufgabe zugrunde, die vorstehend genannten Nachteile zu vermeiden.

Diese Aufgabe wird erfindungsgemäß durch die Merkmale des Anspruchs 1 gelöst. Beim erfindungsgemäßen Dübel mit den Merkmalen des Anspruchs 1 sind die Spreizschenkel in Umfangsrichtung durch ein dehnbares Material miteinander verbunden, das durch mehrere schraubenlinienförmig angeordnete Schlitze durchbrochen ist. Zur Dehnbarkeit kann das Material dünn ausgebildet und/oder in Umfangsrichtung des Dübels wellenförmig sein. Bei der Herstellung des Dübels aus Kunststoff ist das dehnbare Material vorzugsweise einstückig mit den Spreizschenkeln und besteht somit aus demselben Kunststoff wie der übrige Dübel. Das dehnbare Material ist in diesem Fall vorzugsweise dünn als Kunststoffhaut ausgeführt. Durch die Verbindung der Spreizschenkel in Umfangsrichtung erhält der erfindungsgemäße Dübel die Form einer Hülse, die auch im Bereich der Spreizschenkel in Umfangsrichtung geschlossen ist. Dadurch wird eine gute Führung der Spreizschraube erreicht und es wird verhindert, dass die Spreizschraube, selbst bei einer Querbeanspruchung der Spreizschraube, seitlich zwischen den Spreizschenkeln hindurch aus dem Dübel austritt. Weiterer Vorteil der Verbindung der Spreizschenkel in Umfangsrichtung ist eine erhöhte Torsionssteifigkeit des Dübels. Die erhöhte Torsionssteifigkeit hat zunächst den Vorteil, dass sich die Dübelspitze beim Eindrehen der Spreizschraube weniger mitdreht, wodurch sich die Spreizschraube besser in die Dübelspitze einschrauben lässt. Des Weiteren hat die erhöhte Torsionssteifigkeit den Vorteil, dass die Dübelspitze bei einem Nachlassen des Einschraubmoments, also beispielsweise beim Nachfassen eines Schraubendrehers, weniger zurückdreht. Die Spreizschraube ist dadurch, insbesondere beim Eindrehen von Hand, einfacher in den Dübel eindrehbar. Zusätzlich hat der erfindungsgemäße Dübel den Vorteil, dass ein Drehmoment beim Eindrehen der Spreizschraube nach Beginn des Aufspreizens in einem Hohlbaustoff weniger stark nachlässt. Bei den bekannten Spreizdübeln fällt das Drehmoment stark ab, wenn bei einer Befestigung des Dübels an einem Hohlbaustoff die Spreizschenkel begonnen. haben auszuknicken oder sich um einander zu winden. Durch die erhöhte Steifigkeit des erfindungsgemäßen Dübels in Folge der Verbindung seiner Spreizschenkel in Umfangsrichtung ist dieser Effekt zumindest geringer. Der Effekt des starken Abfalls des Drehmoments beim Eindrehen der Spreizschraube ist nachteilig, weil er das Gefühl vermittelt, die Spreizschraube oder der Dübel seien durch Überbeanspruchung ausgerissen und hätten deswegen keinen festen Sitz im Hohlbaustoff.

Durch die schraubenlinienförmig angeordneten Schlitze in dem dehnbaren Material wird die Torsionssteifigkeit nur unwesentlich beeinträchtigt, jedoch die Wulstbildung an der Rückseite eines Hohlbaustoffes oder einer Platte in der Weise begünstigt, dass sich beide Schenkel nahezu vollständig und großflächig um das Bohrloch an der Rückseite des Hohlbaustoffes bzw. der Platte anlegen. Die Schlitze verhindern insbesondere in der Endphase der Wulstbildung ein unkontrolliertes Einreißen des dehnbaren Materials, das im ungünstigen Fall zu einem vollständigen Durchreißen der Verbindung zwischen den beiden Spreizschenkeln und unter Umständen zu einem Einreißen der Dübelspitze führen kann.

Bei einer Ausgestaltung der Erfindung weist das hülsenförmige Dübelende einen größeren Quermesser als der übrige Teil des Dübels auf. Diese Ausgestaltung hat den Zweck, einen guten Sitz des Dübels in einem Hohl- oder Plattenbaustoff zu erzielen, in dem Dübel im Wesentlichen nur mit seinem hülsenförmigen Dübelende in einem Bohrloch aufgenommen ist und sich der übrige Teil des Dübels in einem Hohlraum befindet.

Bei einer Ausgestaltung der Erfindung weist der Dübel an einem Außenumfang wenigstens zwei sich gegenüberliegende und in Längsrichtung sich erstreckende Verdrehsicherungsrippen auf, die über einen Teil ihrer Länge sägezahnförmig ausgebildet sind. Die Verdrehsicherungsrippen nehmen das beim Eindrehen der Spreizschraube auftretende Torsionsmoment auf und verhindern somit das Mitdrehen des Dübels. Durch die sägezahnförmige Ausbildung der Verdrehsicherungsrippen über einen Teil ihrer Länge, insbesondere im Bereich der Spreizschenkel entstehen Unterbrechungen, die einerseits durch Bildung von Schabkanten ein leichtes Eintreiben des Dübels in das Bohrloch ermöglichen und andererseits die Verdrehbarkeit der Spreizschenkel zur Wulstbildung nicht beeinträchtigen.

Bei einer Ausgestaltung der Erfindung ist die hülsenförmige Dübelspitze mit abgewinkelten, beispielsweise V-förmigen Schlitzen versehen, wobei eine Ecke (Scheitel) oder Spitze der Schlitze vorzugsweise zum vorderen oder zum hinteren Ende des Dübels weist. Durch ihre Abwinklung weisen die Schlitze einen Schenkel mit einer Steigung in Richtung einer Gewindesteigung der Spreizschraube und einen anderen Schenkel mit entgegengesetzter Steigung auf. Die Steigung der Schlitze in der Dübelspitze kann von der Gewindesteigung der Spreizschraube abweichen, lediglich ihre Richtung ist gleich bzw. entgegengerichtet. Die Schenkel der abgewinkelten Schlitze, deren Steigung in Richtung der Gewindesteigung der Spreizschraube verläuft, dienen dem Eingriff der Gewindegänge der Spreizschraube, sie bewirken eine gute Anpassung an unterschiedliche Schraubendurchmesser. Die abgewinkelten Schlitze bewirken einen zuverlässigen Eingriff von Spreizschraube mit kleinem Durchmesser ohne Ausreißen der Spreizschraube aus der Dübelspitze beim Anziehen der Spreizschraube. Zugleich vermeiden die abgewinkelten Schlitze einen großen Drehmomentanstieg beim Eindrehen einer Spreizschraube mit großem Schraubendurchmesser.

Die Schenkel der abgewinkelten Schlitze, deren Steigung der Gewindesteigung der Spreizschraube entgegengerichtet ist, bewirken eine axiale Dehnbarkeit der Dübelspitze, wodurch sich ein axialer Abstand axial hintereinander an der Dübelspitze angebrachter abgewinkelter Schlitze verändert. Dadurch wird eine Anpassung an unterschiedliche Gewindesteigungen des Schraubengewindes der Spreizschraube erreicht.

Bei einer Ausgestaltung der Erfindung weist der Dübel einen Schraubenkanal für die Spreizschraube auf, der innerhalb der hülsenförmigen Dübelspitze einen von einer Kreisform abweichenden Querschnitt aufweist. Der Schraubenkanal weist also innerhalb der Dübelspitze in unterschiedlichen Richtungen unterschiedliche Querabmessungen auf. Auch diese Maßnahme dient der Anpassung des Dübels an unterschiedliche Durchmesser von Spreizschrauben. In Weiterbildung weist der Schraubenkanal innerhalb der Dübelspitze einen flachen, beispielsweise schlitzförmigen Schraubenkanal auf. Auch kann der Schraubenkanal innerhalb der Dübelspitze die Form zweier einander kreuzender Schlitze aufweisen.

Schließlich kann die Dübelspitze zwei sich gegenüberliegende und in Achsrichtung verlaufende Einschlitzungen aufweisen, deren Schlitzgrund in einem Abstand zum Schraubenkanal verläuft. Durch diese Gestaltung wird eine weitere Reduzierung des Eindrehmoments beim Eindrehen der Spreizschraube in die Dübelspitze erreicht, da mit den Einschlitzungen die Dehnfähigkeit der Dübelspitze verbessert wird.

Die Erfindung wird nachfolgend anhand eines in der Zeichnung dargestellten Ausführungsbeispiels näher erläutert. Es zeigen:
- Figur 1: einen erfindungsgemäßen Dübel in perspektivischer Darstellung;
- Figur 2: den Dübel aus Figur 1 in Seitenansicht;
- Figur 3: den Dübel aus Figur 1 im Achsschnitt A-A;
- Figuren 4 und 5: Querschnitte entlang der Linien I-I und II-II; und
- Figuren 6 und 7: zwei Anwendungsbeispiele des Dübels aus Figur 1.

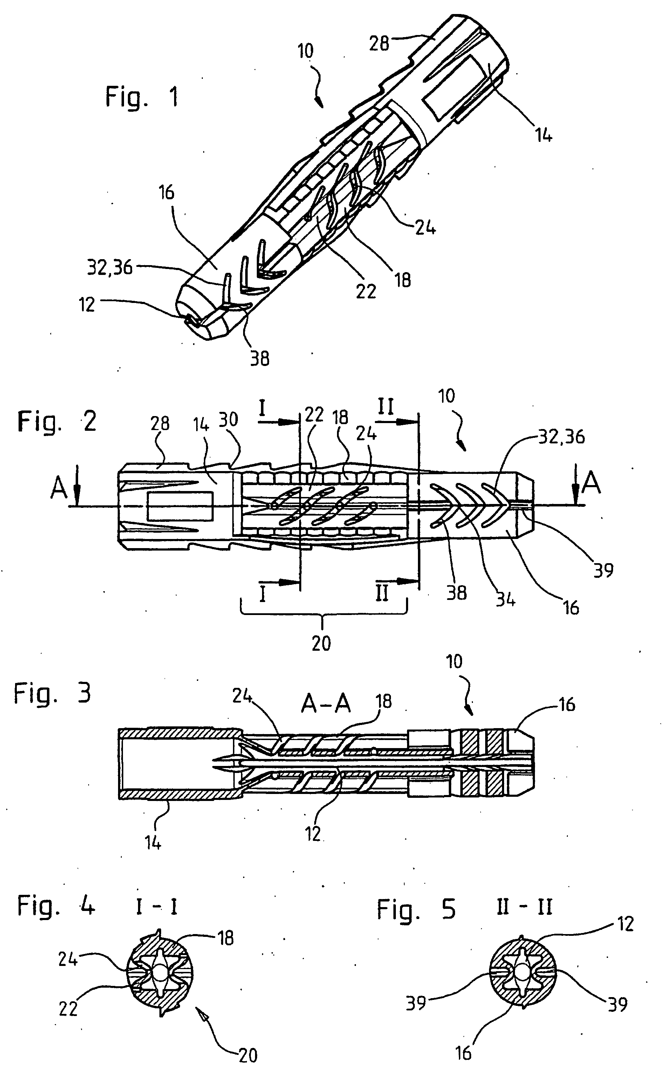

Der in Figuren 1 - 3 dargestellte, erfindungsgemäße Dübel 10 ist aus Kunststoff hergestellt, er weist näherungsweise die Form einer Hülse auf. Der Dübel 10 weist einen Schraubenkanal 12 für eine in Figuren 1-3 nicht dargestellte Spreizschraube auf, der den Dübel 10 axial durchsetzt und sich an zwei Stellen kegelförmig verjüngt.

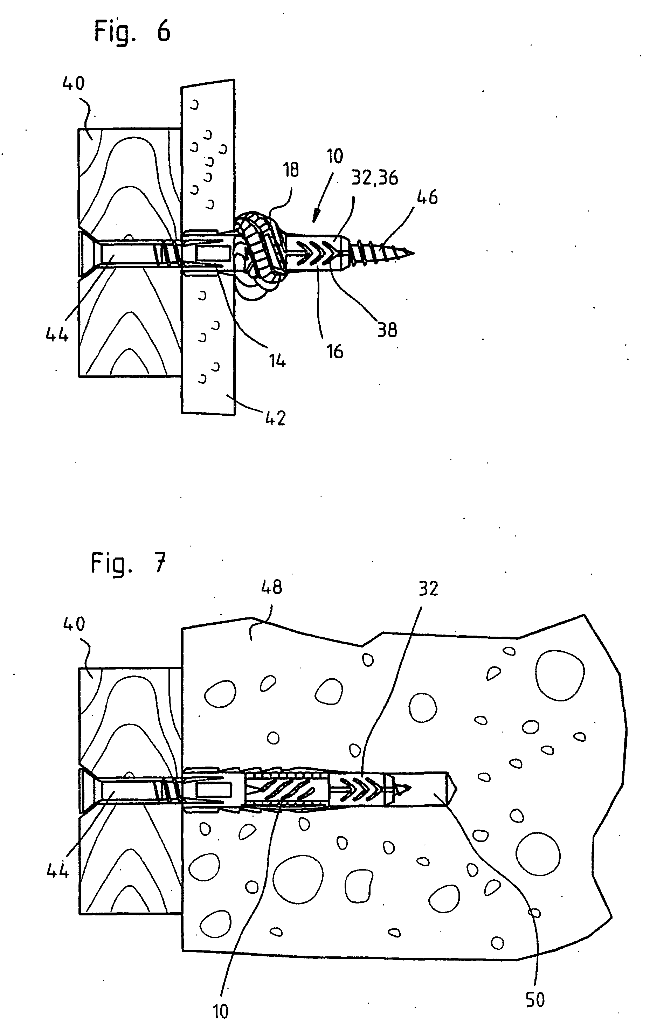

In einem hinteren Bereich weist der Dübel 10 ein hülsenförmiges Dübelende 14 auf, in einem vorderen Bereich eine hülsenförmige Dübelspitze 16, wobei die Dübelspitze 16 durch zwei einander gegenüber angeordneten und in Längsrichtung verlaufende Spreizschenkel 18 einstückig mit dem Dübelende 14 verbunden ist. Die Spreizschenkel 18 definieren einen Spreizbereich 20 des Dübels 10, der sich vom Dübelende 14 zur Dübelspitze 16 erstreckt. In Umfangsrichtung sind die Spreizschenkel 18 durch ein dehnbares Material 22 miteinander verbunden, das durch mehrere schraubenlinienförmig angeordnete Schlitze 24 durchbrochen ist. Das dehnbare Material 22 besteht aus demselben Kunststoff wie der übrige Dübel 10, das dehnbare Material 22 ist einstückiger Bestandteil des Dübels 10. Das dehnbare Material 22 ist als dünne Haut 22 ausgebildet, die die Spreizschenkel 18 in Umfangsrichtung miteinander verbindet (vgl. den Querschnitt I-I des Spreizbereichs 20 in Figur 4). Die dünne Haut 22 weist eine Wellung in Umfangsrichtung auf. Die dünne Haut 22 ist sowohl durch ihre Wellung als auch durch ihre dünne Ausbildung und die Dehnbarkeit des Kunststoffs, aus dem sie besteht, in Umfangsrichtung des Dübels 10 dehnbar. Die schraubenlinienförmig angeordneten Schlitze 24 begünstigen die in Figur 6 dargestellte Wulstbildung der Spreizschenkel bei einer Montage des Dübels 10 an einer Platte, verhindern jedoch gleichzeitig das Einreißen der dünnen Haut 22.

Am Außenumfang des Dübels 10 sind vom Dübelende 14 ausgehend zwei sich gegenüberliegende und in Dübellängsrichtung verlaufende Verdrehsicherungsrippen 28 angeordnet, die sich über den Spreizbereich 20 hinaus bis zur Dübelspitze 16 erstrecken. Die Verdrehsicherungsrippen 28 sind über einen Teil ihrer Länge sägezahnförmig ausgebildet, wobei die senkrechtstehende Stimkante 30 in Richtung Dübelspitze 16 weist.

Die hülsenförmige Dübelspitze 16 ist mit abgewinkelten Schlitzen 32 versehen, deren Spitze oder Ecke 34 nach vorn gerichtet ist. Die Schlitze 32 sind an zwei Stellen einander gegenüberliegend an der Dübelspitze 16 angeordnet und es sind mehrere (drei) Schlitze 32 mit axialem Abstand voneinander an der Dübelspitze 16 angeordnet. Die abgewinkelten Schlitze 32 weisen Schenkel 36, 38 auf, wobei ein Schenkel 36 eine Steigung in Richtung einer Gewindesteigung der in Figuren 1-3 nicht dargestellten Spreizschraube und der andere Schenkel 38 eine Steigung in entgegengesetzter Richtung aufweist. Die Steigung der Schenkel 36 muss nicht mit der Gewindesteigung der Spreizschraube übereinstimmen, die Steigung geht nur in derselben Richtung.

Der Schraubenkanal 12 weist im Bereich des Dübelendes 14 in etwa einen kreisförmigen Querschnitt auf, er verengt sich im Spreizbereich 20 (Figur 4) und hat in der Dübelspitze 16 die Form eines Schlitzes (Figur 5). Dies ermöglicht eine gute Anpassung des Schraubenkanals 12 an Spreizschrauben mit unterschiedlichem Durchmesser. Dem gleichen Zweck dienen die beiden sich gegenüberliegenden und in Achsrichtung verlaufenden Einschlitzungen 39 im Bereich der Dübelspitze 16 deren Schlitzgrund in einem Abstand zum Schraubenkanal 12 verläuft.

Die Funktion des erfindungsgemäßen Dübels 10 wird nachfolgend anhand Figuren 6 und 7 erläutert: Figur 6 zeigt die Befestigung eines Gegenstandes 40 an einem plattenförmigen Baustoff 42. Der Dübel 10 ist in ein Bohrloch im plattenförmigen Baustoff 42 eingesetzt. Aufgrund des größeren Quermessers des Dübelendes 14 weitet das Dübelende 14 das Bohrloch auf und verfestigt dabei den das Dübelende 14 umgebenden Baustoff. Die Verdrehsicherungsrippen 28 bilden Widerlagerflächen, die ein Mitdrehen des Dübels 10 beim Eindrehen einer Spreizschraube 44 verhindern.

Nach dem Einsetzen des Dübels 10 wird der mit einem Bohrloch versehene, zu befestigende Gegenstand 40 an den plattenförmigen Baustoff 42 gehalten und es wird die Spreizschraube 44 durch den Gegenstand 40 gesteckt und in den Dübel 10 eingedreht. Dabei schneidet sich ein Schraubengewinde 46 der Spreizschraube 44 in die Dübelspitze 16 ein und das Schraubengewinde 46 kommt in Eingriff mit den Schenkeln 36 der abgewinkelten Schlitze 32, die eine Steigung in dieselbe Richtung wie das Schraubengewinde 46 der Spreizschraube 44 aufweisen. Die Schenkel 38 der abgewinkelten Schlitze 32, die eine Steigung in entgegengesetzter Richtung aufweisen, ermöglichen eine axiale Dehnung der Dübelspitze 16, so dass sich der axiale Abstand der Schlitze 32 voneinander an eine Gewindesteigung des Schraubengewindes 46 anpasst. In Verbindung mit dem in der Dübelspitze 16 flachen, schlitzförmigen Schraubenkanal 12 bewirken die abgewinkelten Schlitze 32 eine gute Anpassung der Dübelspitze 16 an einen Durchmesser der jeweils verwendeten Spreizschraube sowie an die Steigung ihres Schraubengewindes 46.

Beim Eindrehen und Anziehen zieht die Spreizschraube 44 die Dübelspitze 16 in Richtung des Dübelendes 14, ein Abstand zwischen der Dübelspitze 16 und dem Dübelende 14 verkürzt sich. Dabei winden sich die Spreizschenkel 18 knotenartig umeinander, so dass die Spreizschenkel 18 des Dübels 10 den plattenförmigen Baustoff 42 formschlüssig hintergreifen, wodurch sich eine gute Verankerung des Dübels 10 auch an einem plattenförmigen Baustoff 42 geringer Festigkeit wie beispielsweise Gipskarton ergibt.

In Figur 7 ist die Verankerung eines Gegenstandes 40 an einem Vollbaustoff 48 wie beispielsweise Beton dargestellt. Hier wird der Spreizdübel 10 in an sich bekannter Weise in ein Bohrloch 50 im Vollbaustoff eingesetzt, der Gegenstand 40 wird angesetzt und die Spreizschraube 44 durch den Gegenstand 40 durchgesteckt und in den Dübel 10 eingedreht. Die Spreizschraube 44 drückt die Spreizschenkel 18 auseinander und verankert dadurch den Spreizdübel 10 im Bohrloch 50. Das Auseinanderdrücken, also Aufspreizen der Spreizschenkel 18 wird von den dünnen, die Spreizschenkel 18 in Umfangsrichtung verbindenden Häuten 22 nicht behindert, da diese dünn sind und eine Wellung aufweisen und deswegen in Umfangsrichtung dehnbar sind. Die dünnen Häute 22, die die Spreizschenkel 18 im Spreizbereich 20 zu einer Art Hülse verbinden, verhindern, dass die Spreizschraube 44 beim Eindrehen seitlich zwischen den Spreizschenkeln 18 aus dem Schraubenkanal 12 austreten kann.

## Patentansprüche

1. Dübel (10) zur Befestigung an Hohl- und an Vollbaustoffen, mit sich in Längsrichtung erstreckenden Spreizschenkeln (18), die durch Eindrehen einer Spreizschraube (44) in den Dübel (10) aufspreizbar sind, wobei die Spreizschenkel (18) an einem hinteren Ende durch ein hülsenförmiges Dübelende (14), durch das die Spreizschraube (44) durchsteckbar ist, und an einem vorderen Ende durch eine hülsenförmige Dübelspitze (16), in die die Spreizschraube (44) einschraubbar ist, miteinander verbunden sind, wobei die Spreizschenkel (18) in Umfangsrichtung durch ein dehnbares Material (22) miteinander verbunden sind, das durch mehrere schraubenlinieförmig angeordnete Schlitze (24) durchbrochen ist.

2. Dübel nach Anspruch **1, dadurch gekennzeichnet, dass** das Dübelende (14) einen größeren Quermesser als der Dübel (10) im Bereich der Spreizschenkel (18) und der Dübelspitze (16) aufweist.

3. Dübel nach Anspruch 1, **dadurch gekennzeichnet, dass** am Außenumfang des Dübels (10) wenigstens zwei sich gegenüberliegende und in Dübellängsrichtung sich erstreckende Verdrehsicherungsrippen (28) angeordnet sind, die über einen Teil ihrer Länge sägezahnförmig ausgebildet sind.

4. Dübel nach Anspruch 1, **dadurch gekennzeichnet, dass** die Dübelspitze (16) abgewinkelte Schlitze (32) aufweist, wobei ein Schenkel (36) der Schlitze (32) eine Steigung in Richtung einer Gewindesteigung der Spreizschraube (44) und ein anderer Schenkel (38) eine Steigung in entgegengesetzter Richtung aufweist.

5. Dübel nach Anspruch 1, **dadurch gekennzeichnet, dass** ein Schraubenkanal (12) des Dübels (10) für die Spreizschraube (44) innerhalb der Dübelspitze (16) einen von einer Kreisform abweichenden Querschnitt aufweist.

6. Dübel nach Anspruch 1, **dadurch gekennzeichnet, dass** der Schraubenkanal (12) zumindest innerhalb der Dübelspitze (16) einen flachen Querschnitt aufweist.

7. Dübel nach Anspruch 6, **dadurch gekennzeichnet, dass** der Schraubenkanal (12) schlitzförmig ist.

8. Dübel nach Anspruch 7, **dadurch gekennzeichnet, dass** der Schraubenkanal (12) die Form zweier einander kreuzender Schlitze aufweist.

9. Dübel nach Anspruch 1, **dadurch gekennzeichnet, dass** die Dübelspitze (16) zwei sich gegenüberliegende und in Dübellängsrichtung verlaufende Einschlitzungen (39) aufweist, deren Schlitzgrund in einem Abstand zum Schraubenkanal (12) verläuft.

## Claims

1. Plug (10) for fixing to hollow and to solid building materials, having longitudinally extending expansible limbs (18) that are expansible by screwing an expansion screw (44) into the plug (10), the expansible limbs (18) being joined to one another at the rear end by a sleeve-form plug end (14), through which the expansion screw (44) is insertable, and at the leading end by a sleeve-form plug tip (16), into which the expansion screw (44) can be screwed, wherein the expansible limbs (18) are joined to one another circumferentially by a stretchable material (22) that is pierced by several helically arranged slots (24).

2. Plug according to claim 1, **characterised in that** the plug end (14) has a larger transverse dimension than the plug (10) in the region of the expansible limbs (18) and the plug tip (16).

3. Plug according to claim 1, **characterised in that** at least two opposing anti-rotation ribs (28) extending in the lengthwise direction of the plug and which are of saw-tooth construction over a part of their length are arranged at the outer circumference of the plug (10).

4. Plug according to claim 1, **characterised in that** the plug tip (16) has non-rectilinear slots (32), one arm (36) of the slots (32) being inclined in the direction of a lead of the thread of the expansion screw (44) and another arm (38) being inclined in the opposite direction.

5. Plug according to claim 1, **characterised in that** a screw channel (12) of the plug (10) for the expansion screw (44) has inside the plug tip (16) a cross-section other than circular.

6. Plug according to claim 1, **characterised in that** at least in the plug tip (16) the screw channel (12) has a flat cross-section.

7. Plug according to claim 6, **characterised in that** the screw channel (12) is slot-shaped.

8. Plug according to claim 7, **characterised in that** the screw channel (12) is in the form of two intersecting slots.

9. Plug according to claim 1, **characterised in that** the plug tip (16) has two opposing slots (39) running in the lengthwise direction of the plug, the base of which slots runs spaced from the screw channel (12).

## Revendications

1. Cheville (10) destinée à être fixée dans des matériaux de construction creux et des matériaux de construction pleins, comprenant des branches expansibles (18) orientées dans le sens longitudinal, qui peuvent s'écarter sous l'effet du vissage d'une vis d'expansion (44) dans la cheville (10), les branches expansibles (18) étant assemblées entre elles, dans une extrémité arrière, par une base de cheville (14) en forme de manchon à travers laquelle on peut faire passer la vis d'expansion (44) et, dans une extrémité avant, par une tête de cheville (16) en forme de manchon dans laquelle on peut visser la vis d'expansion (44), les branches expansibles (18) étant assemblées entre elles dans le sens périphérique par un matériau extensible (22) qui est percé par plusieurs fentes (24) disposées en hélice.

2. Cheville selon la revendication 1, **caractérisée en ce que** le diamètre de la base de cheville (14) est supérieur au diamètre de la cheville (10) dans la zone des branches expansibles (18) et de la tête de cheville (16).

3. Cheville selon la revendication 1, **caractérisée en ce que**, sur le pourtour extérieur de la cheville (10), sont réalisées au moins deux nervures anti-torsion (28), qui sont disposées face à face et orientées dans le sens longitudinal de la cheville et qui sont conçues en forme de dents de scie sur une partie de leur longueur.

4. Cheville selon la revendication 1, **caractérisée en ce que** la tête de cheville (16) comporte des fentes (32) coudées, une branche (36) des fentes (32) présentant une inclinaison dans la direction d'un pas de filetage de la vis d'expansion (44) et une autre branche (38) présentant une inclinaison dans la direction inverse.

5. Cheville selon la revendication 1, **caractérisée en ce qu'**un canal pour vis (12), dans la cheville (10) pour la vis d'expansion (44), est conçu à l'intérieur de la tête de cheville (16) avec une section s'écartant de la forme circulaire.

6. Cheville selon la revendication 1, **caractérisée en ce que** le canal pour vis (12) au moins à l'intérieur de la tête de cheville (16) est conçu avec une section plate.

7. Cheville selon la revendication 6, **caractérisée en ce que** le canal pour vis (12) est conçu sous forme de fente.

8. Cheville selon la revendication 7, **caractérisée en ce que** le canal pour vis (12) est conçu sous la forme de deux fentes se croisant.

9. Cheville selon la revendication 1, **caractérisée en ce que** la tête de cheville (16) comporte deux entailles (39), qui sont disposées face à face et orientées dans le sens longitudinal de la cheville et dont le fond d'entaille est disposé à une distance du canal pour vis (12).
